# EUROPÄISCHE PATENTSCHRIFT

(11) **EP 3 012 604 B1**
(45) Veröffentlichungstag und Bekanntmachung des Hinweises auf die Patenterteilung: **02.08.2017**
(21) Anmeldenummer: 15180854.0
(22) Anmeldetag: 13.08.2015
(51) Int. Cl.: G01J 5/20

(54) **SENSOR ZUM DETEKTIEREN VON INFRAROTSTRAHLUNG UND VERFAHREN ZUM BETREIBEN DES SENSORS**
SENSOR FOR THE DETECTION OF INFRARED RADIATION AND METHOD FOR OPERATING THE SENSOR
CAPTEUR DE DETECTION DE RAYONNEMENT INFRAROUGE ET PROCEDE DE FONCTIONNEMENT DU CAPTEUR

(30) Priorität: 24.10.2014 DE 102014221610
(43) Veröffentlichungstag der Anmeldung: 27.04.2016
(73) Patentinhaber: ROBERT BOSCH GMBH, 70442 Stuttgart (DE)
(72) Erfinder: Utermoehlen, Fabian, 70197 Stuttgart (DE)

(56) Entgegenhaltungen:
- GB-A- 2 270 590
- US-A1- 2009 321 641
- VIKRANT J. GOKHALE ET AL: "Novel uncooled detector based on gallium nitride micromechanical resonators", PROCEEDINGS OF SPIE, Bd. 8353, 1. Mai 2012 (2012-05-01), Seiten 835319-835319-6, XP055124878, ISSN: 0277-786X, DOI: 10.1117/12.920450

## Beschreibung

### Stand der Technik

Die vorliegende Erfindung bezieht sich auf einen Sensor mit einem Sensorpixel zum Detektieren von Infrarotstrahlung, auf ein Verfahren zum Betreiben des Sensors, sowie auf die Verwendung des Sensors. Infrarotstrahlung kann unter Verwendung eines fotoelektrischen Sensors registriert werden. Um dabei eine ausreichende Bildqualität zu erreichen, muss der Sensor gekühlt werden.

VIKRANT J. GOKHALE ET AL: "Novel uncooled detector based on gallium nitride micromechanical resonators", PROCEEDINGS OF SPIE, Bd. 8353, 1. Mai 2012 (2012-05-01), Seiten 835319-835319-6, ISSN: 0277-786X, 001: 10.1117/12.920450 offenbart ein Sensorpixel zum Detektieren von Infrarotstrahlung, wobei das Sensorpixel einen IR- Absorbierer und einen Feldeffekttransistor mit hoher Elektronenmobilität aufweist.

GB 2 270 590 A offenbart ein Feldeffekttransistoren umfassendes Halbleiterbauteil.

US 2009/321641 A1 offenbart einen auf einem Bipolartransistor basierenden ungekühlten Infrarotsensor.

### Offenbarung der Erfindung

Vor diesem Hintergrund werden mit dem hier vorgestellten Ansatz ein Sensor zum Detektieren von Infrarotstrahlung, ein Verfahren zum Betreiben eines Sensors und die Verwendung des Sensors gemäß den Hauptansprüchen vorgestellt. Vorteilhafte Ausgestaltungen ergeben sich aus den jeweiligen Unteransprüchen und der nachfolgenden Beschreibung.

Mit dem hier vorgestellten Ansatz wird die Verwendung eines Feldeffekttransistors mit hoher Elektronenmobilität zum Detektieren von Infrarotstrahlung vorgestellt.

Es wird ein Sensorpixel zum Detektieren von Infrarotstrahlung vorgestellt, wobei das Sensorpixel eine Absorberfläche zum Absorbieren der Infrarotstrahlung und einen an die Absorberfläche thermisch gekoppelten Feldeffekttransistor mit hoher Elektronenmobilität zum Erfassen einer Temperatur der Absorberfläche aufweist, wobei der Feldeffekttransistor einen Sourcekontakt, einen Drainkontakt und einen Gatekontakt aufweist.

Gemäß dem Planckgesetz emittiert jedes Objekt elektromagnetische Strahlung, die für Objekte mit einer Objekttemperatur um 300 K im Ferninfrarotbereich, also bei Wellenlängen ca. 8 µm bis 14 µm liegt. In diesem Bereich ist die Absorption in der Atmosphäre nahezu vernachlässigbar, sodass Sensoren die Strahlung auch über große Entfernungen detektieren können und so ein Rückschluss auf die Objekttemperatur gezogen werden kann.

Dazu gibt es prinzipiell zwei Sensorprinzipien. Ein Ansatz basiert direkt auf der Detektion des Photons unter Verwendung eines gekühlten Detektors. Hier kann eine sehr hohe Genauigkeit erreicht werden.

Der hier vorgestellte Ansatz basiert auf dem bolometrischen Prinzip, also der Absorption der Photonen und die Detektion der dabei entstehenden Wärme. Dabei ist ein geringer Aufwand und Energieverbrauch erforderlich, was den hier vorgestellten Ansatz gerade für mobile Geräte prädestiniert. Weiterhin ist der hier vorgestellte Ansatz kostengünstig.

Das bolometrische Prinzip ermöglicht ein ungekühltes Betreiben des Sensors. Die Wandlung des Temperatursignals in ein elektrisch auswertbares Signal kann resistiv, mit Thermoelementen, pyroelektrisch oder mit geeigneten Bauelementen wie z. B. Dioden erfolgen. Da Dioden keine Schaltmatrix zum Auswählen eines einzelnen Pixels benötigen sowie auch für Temperaturgleichsignale empfindlich sind, werden sie in herkömmlichen Mikrobolometern eingesetzt. Da Dioden in einer Spannungsrichtung sperren, fließt bei geeignetem Anschluss der Strom nur durch jeweils ein Pixel eines Pixel-Arrays bzw. einer Pixel-Matrix.

Einige Prinzipien, wie beispielsweise das pyroelektrische, reagieren nur auf Temperaturänderungen. Damit trotzdem ein Wärmebild erzeugt werden kann, kann ein "Chopper" eingesetzt werden, der das Pixel immer wieder abdunkelt.

Bei einem herkömmlichen Sensorpixel werden die Dioden auf ein mit MEMS Prozessen (Mikrosystem-Prozessen) hergestelltes Pixel aufgebracht, das zusätzlich einen Infrarot-Absorber enthält. Der MEMS-Prozess kann auf einem Drucksensorprozess basieren, der um ein spezielles Verfahren zum Freistellen dünner Halteärmchen ergänzt ist, an denen das Pixel aufgehängt ist.

Um die Sensorempfindlichkeit zu erhöhen, kann entweder das Design des MEMS-Pixels optimiert werden oder die Sensitivität des Bauelementes erhöht werden. Im Falle von Dioden ist die Sensitivität technologisch nur in Grenzen einstellbar. Aus diesem Grund können mehrere Dioden in Serienschaltung kombiniert werden, um die Temperatursensitivität additiv zu erhöhen. Daraus ergibt sich ein Spannungsabfall von ca. -2 mV/K pro Diode bei konstantem Strom. Die Serienschaltung erhöht dabei das Rauschen des Sensors. Besonders das 1/f Rauschen infolge von Grenzflächenstörstellen an der Fläche zwischen der Oxidinsel und dem epitaktisch aufgewachsenen Silizium (Epi-Si) hat einen großen Einfluss auf die Sensorperformance.

Der hier vorgestellte Ansatz zeigt die Verendung eines Feldeffekttransistors mit hoher Elektronenmobilität (HEMT; High Electron Mobility Transistor) als Bauelement zur thermisch-elektrischen Wandlung, welches einen Stromfluss an der Grenzfläche vermeidet. Die Stromleitung findet in einem zweidimensionalen Elektronengas im hochqualitativen einkristallinen Material in der Tiefe statt. Zur Auswertung kann entweder die Temperaturabhängigkeit des Drainstroms oder aber die Temperaturabhängigkeit der Gate-Source-Kapazität verwendet werden. Letztere erfordert eine Frequenzmessung, die theoretisch beliebig genau realisierbar ist und in Standard-ASIC Bausteinen verfügbar ist.

Dies ist vor allem für Automotive-Anwendungen ein entscheidender Vorteil. Ein in der Tiefe liegender Stromfluss verbessert zudem signifikant das Rauschen des Sensors.

Eine Frequenzmessung im Gegensatz zur Strommessung ist vor allem deshalb vorteilhaft, weil sie beliebig genau sein kann und es bereits Standard-ASIC Architekturen gibt, die diese Funktion unterstützen. Dies erspart erheblich Entwicklungskosten.

Der Sourcekontakt kann über einen in einer Balkenstruktur des Sensorpixels integrierten ersten Anschluss zu einem Substrat des Sensorpixels geführt sein. Der Drainkontakt kann über einen in der Balkenstruktur integrierten zweiten Anschluss zu dem Substrat geführt sein. Durch die Balkenstruktur kann die Absorberfläche thermisch von dem Substrat entkoppelt ausgeführt sein.

Der Drainkontakt kann mit dem Gatekontakt verbunden sein und über den zweiten Anschluss zu dem Substrat geführt sein. Dadurch kann der Feldeffekttransistor über lediglich zwei Anschlüsse kontaktiert sein, was zu einer guten thermischen Entkopplung führt.

Der Gatekontakt kann über einen in der Balkenstruktur integrierten dritten Anschluss zu dem Substrat geführt sein. Durch den dritten Anschluss kann ein Arbeitspunkt des Feldeffekttransistors eingestellt werden. Beispielsweise kann eine Empfindlichkeit des Sensorpixels an vorherrschende Verhältnisse angepasst werden.

Die Absorberfläche kann im Bereich des Sourcekontakts und alternativ oder ergänzend im Bereich des Drainkontakts mit dem Feldeffekttransistor gekoppelt sein. Dadurch kann der Feldeffekttransistor auf einer lichtabgewandten Seite der Absorberfläche angeordnet sein.

Weiterhin wird ein Sensor zum Detektieren von Infrarotstrahlung vorgestellt, wobei der Sensor die folgenden Merkmale aufweist:
ein Sensorpixel gemäß dem hier vorgestellten Ansatz; und
ein Steuergerät gemäß dem hier vorgestellten Ansatz.

Ferner wird ein Verfahren zum Betreiben eines Sensorpixels gemäß dem hier vorgestellten Ansatz vorgestellt, wobei das Verfahren einen Schritt des Erfassens einer Sensiergröße an dem Feldeffekttransistor mit hoher Elektronenmobilität aufweist, wobei die Sensiergröße eine Temperatur des Feldeffekttransistors repräsentiert.

Im Schritt des Erfassens kann ein Spannungspotenzial zwischen dem Sourcekontakt und dem Drainkontakt angelegt werden. Als die Sensiergröße kann ein Stromfluss zwischen dem Sourcekontakt und dem Drainkontakt gemessen werden. Dabei repräsentiert der Stromfluss eine Temperatur an dem Feldeffekttransistor. So kann das Sensorpixel einfach und kostengünstig ausgelesen werden.

Im Schritt des Erfassens kann ein, die Kapazität zwischen dem Sourcekontakt und dem Gatekontakt umfassender, Schwingkreis zu einer Schwingung im Bereich einer Resonanzfrequenz des Schwingkreises angeregt werden. Als die Sensiergröße kann die Resonanzfrequenz gemessen werden. Dabei repräsentiert die Resonanzfrequenz eine Temperatur an dem Feldeffekttransistor. Ein Schwingkreis ist einfach realisierbar. Über eine regelbare Anregungsfrequenz kann die Schwingung im Schwingkreis einfach an die von der Kapazität abhängige Resonanzfrequenz angepasst werden. Dabei kann über eine maximale Toleranz der Abweichung eine Messgenauigkeit für die Temperatur vorbestimmt werden. Die Schwingungsfrequenz der Schwingung kann direkt erfasst werden oder die Anregungsfrequenz kann ausgewertet werden.

Das Verfahren kann einen Schritt des Einstellens eines Arbeitspunkts des Feldeffekttransistors aufweisen. Dabei kann der Arbeitspunkt unter Verwendung eines elektrischen Anpassungspotenzials zwischen dem Drainkontakt und dem Sourcekontakt oder zwischen dem Drainkontakt und dem Gatekontakt eingestellt werden.

Der hier vorgestellte Ansatz schafft ein Steuergerät, das ausgebildet ist, um die Schritte einer Variante eines hier vorgestellten Verfahrens in entsprechenden Einrichtungen durchzuführen, anzusteuern bzw. umzusetzen. Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Der hier vorgestellte Ansatz wird nachstehend anhand der beigefügten Zeichnungen beispielhaft näher erläutert. Es zeigen:
Fig. 1 ein Blockschaltbild eines Sensors gemäß einem Ausführungsbeispiel der vorliegenden Erfindung;
Fig. 2 eine Darstellung eines Sensorpixels gemäß einem Ausführungsbeispiel der vorliegenden Erfindung;
Fig. 3 eine Darstellung eines Feldeffekttransistors mit hoher Elektronenmobilität gemäß einem Ausführungsbeispiel der vorliegenden Erfindung; und
Fig. 4 ein Ablaufdiagramm eines Verfahrens zum Betreiben eines Sensorpixels gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

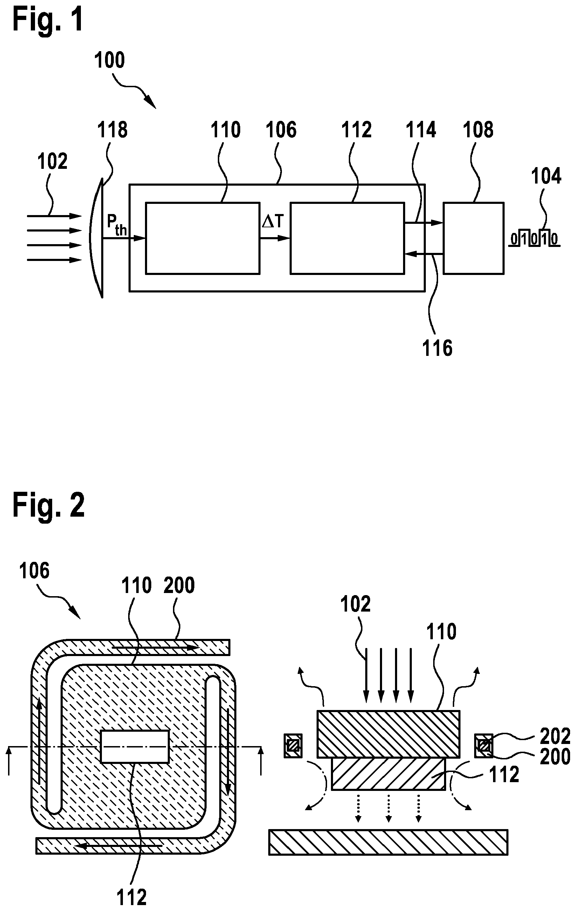

Fig. 1 zeigt ein Blockschaltbild eines Sensors 100 gemäß einem Ausführungsbeispiel der vorliegenden Erfindung. Der Sensor 100 ist dazu ausgebildet, eine Intensität von auf den Sensor 100 einfallender Infrarotstrahlung 102 in einem Intensitätssignal 104 abzubilden. Dazu weist der Sensor 100 eine mikroelektromechanische Struktur beziehungsweise MEMS-Struktur aus Sensorpixeln 106 und ein Steuergerät 108 zum Betreiben des Sensors 100 auf. Die MEMS-Struktur ist hier stark vereinfacht dargestellt. Die MEMS-Struktur ist als Array aus regelmäßig angeordneten Sensorpixeln 106 ausgebildet. Jedes Sensorpixel weist eine thermisch von einem Substrat des Sensors entkoppelte Absorberfläche 110 zum Absorbieren der auf das Sensorpixel einfallenden Infrarotstrahlung 102 und ein wärmeempfindliches Element 112 zum Erfassen einer Temperatur der Absorberfläche 110 auf. Durch die auf die Absorberfläche 110 einfallende thermische Leistung Pₜₕ erwärmt sich die Absorberfläche 110 um eine Temperaturdifferenz ΔT. Das wärmeempfindliche Element 112 bildet die Temperaturdifferenz ΔT in einem elektrischen Messsignal 114 beziehungsweise einer Sensiergröße 114 ab. Dabei ergibt sich die Temperaturdifferenz ΔT aus einem Produkt der einfallenden thermischen Leistung Pₜₕ und einem Wärmewiderstand Rₜₕ der Absorberfläche 110.

Als wärmeempfindliches Element 112 wird bei dem hier vorgestellten Ansatz ein Feldeffekttransistor 112 mit hoher Elektronenmobilität verwendet. Der Feldeffekttransistor 112 kann als HEMT 112 (High-electron-mobility transistor) bezeichnet werden.

In einem Ausführungsbeispiel stellt der Feldeffekttransistor 112 als Sensiergröße 114 einen elektrischen Stromfluss 114 zwischen einem Sourcekontakt und einem Drainkontakt des Feldeffekttransistors 112 bereit. Der Stromfluss 114 wird in dem Steuergerät 108 erfasst und in das Intensitätssignal 104 umgewandelt. Dazu stellt das Steuergerät 108 ein elektrisches Betriebssignal 116 für das wärmeempfindliche Element 112 bereit. Das Steuergerät 108 stellt als Betriebssignal 116 ein Spannungspotenzial zwischen dem Sourcekontakt und dem Drainkontakt bereit.

In einem Ausführungsbeispiel sind die Gateelektrode und die Sourceelektrode so mit dem Steuergerät 108 verbunden, dass sie als Kondensator mit veränderlicher elektrischer Kapazität Teil eines schwingungsfähigen Schwingkreises sind. Das Steuergerät 108 stellt als das Betriebssignal 116 eine Anregungsenergie für den Schwingkreis bereit. Dabei wird eine Anregungsfrequenz der Anregungsenergie so geregelt, dass der Schwingkreis näherungsweise beziehungsweise möglichst nah an seiner Resonanzfrequenz schwingt. Die Resonanzfrequenz ist abhängig von der elektrischen Kapazität des Kondensators. Die Kapazität wiederum ist temperaturabhängig. Das Steuergerät 108 misst als Sensiergröße 114 die Resonanzfrequenz beziehungsweise die Anregungsfrequenz und stellt das Intensitätssignal 104 unter Verwendung der Resonanzfrequenz beziehungsweise der Anregungsfrequenz bereit.

Insbesondere wird ein digitales Intensitätssignal 104 bereitgestellt.

Im hier dargestellten Ausführungsbeispiel ist in einem optischen Pfad des Sensors 100 eine Optik 118 angeordnet, die die einfallende Infrarotstrahlung 102 auf die Absorberflächen 110 des Arrays konzentriert, um eine vergrößerte Temperaturdifferenz ΔT und damit ein verstärktes Messsignal 114 zu erhalten.

Im Gegensatz zum Dioden-Bolometer kann beim Einsatz eines einzelnen HEMTs 112 auf eine Serienschaltung mehrerer temperatursensitiver Bauelemente verzichtet werden. Dies erhöht automatisch die Miniaturisierbarkeit des Pixels 106 und verringert dessen thermische Trägheit.

Fig. 2 zeigt eine Darstellung eines Sensorpixels 106 gemäß einem Ausführungsbeispiel der vorliegenden Erfindung. Das Sensorpixel 106 entspricht im Wesentlichen dem Sensorpixel in Fig. 1. Hier ist zusätzlich eine Balkenstruktur 200 dargestellt, über die die Absorberfläche 110 von einem umgebenden Substrat thermisch entkoppelt ist. Mit anderen Worten ist die Absorberfläche 110 als frei aufgehängte Insel 110 ausgebildet. Das wärmeempfindliche Element 112 ist in die Insel 110 integriert. Elektrische Zuleitungen 202 für das wärmeempfindliche Element 112 sind in der Balkenstruktur 200 integriert, um das wärmeempfindliche Element 112 elektrisch mit anderen elektrischen Komponenten des Sensors zu verbinden.

Die Balkenstruktur 200 ist in diesem Ausführungsbeispiel spiralförmig um die Insel 110 umlaufend ausgeführt. Die Balkenstruktur 200 weist eine geringe Querschnittsfläche auf, um einen großen Wärmewiderstand bereitzustellen und damit einen möglichst geringen Wärmezufluss beziehungsweise Wärmeabfluss von oder zu der Insel zu ermöglichen, der eine Messung der einfallenden Infrarotstrahlung 102 verfälschen könnte.

In einem Ausführungsbeispiel sind der Feldeffekttransistor 112 mit hoher Elektronenbeweglichkeit und die Absorberfläche 110 als Stapel ausgebildet, dabei sind die Sourceelektrode, die Gateelektrode und die Drainelektrode zwischen dem Feldeffekttransistor 112 und der Absorberfläche 110 angeordnet. Insbesondere ist der Feldeffekttransistor 112 auf einer von der einfallenden Infrarotstrahlung 102 abgewandten Seite der Absorberfläche 110 angeordnet.

Das Freistellen der Pixel 106 erfolgt unter Verwendung von Halbleitertechnik.

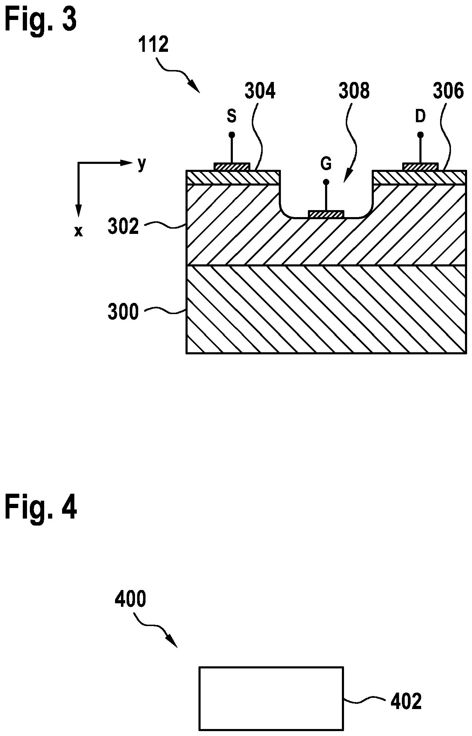

Fig. 3 zeigt eine Darstellung eines Feldeffekttransistors 112 mit hoher Elektronenbeweglichkeit gemäß einem Ausführungsbeispiel der vorliegenden Erfindung. Der Sperrschicht-Feldeffekttransistor 112 entspricht im Wesentlichen dem wärmeempfindlichen Element 112 in den Figuren 1 und 2. Der Feldeffekttransistor 112 ist als Halbleiterbauelement ausgeführt. Der Feldeffekttransistor 112 weist eine erste Halbleiterschicht 300 und eine zweite Halbleiterschicht 302 auf. Die Halbleiterschichten 300, 302 grenzen unmittelbar aneinander an. Auf der zweiten Halbleiterschicht 302 ist ein Sourcegebiet 304, und ein Draingebiet 306 angeordnet. Das Sourcegebiet 304 und das Draingebiet 306 sind höher dotiert als die Halbleiterschichten 300, 302. Zwischen dem Sourcegebiet 304 und dem Draingebiet 306 ist ein Graben 308 angeordnet. In dem Graben 308 liegt die zweite Halbleiterschicht 302 frei.

In einem Ausführungsbeispiel ist die erste Halbleiterschicht 300 undotiert. Die zweite Halbleiterschicht 302 ist schwach n-dotiert. Das Sourcegebiet 304 und das Draingebiet 306 sind stark n-dotiert.

Das Sourcegebiet 304 ist durch einen Sourcekontakt S elektrisch kontaktiert. Das Draingebiet 306 ist durch einen Drainkontakt D elektrisch kontaktiert. In dem Graben 308 zwischen dem Sourcegebiet 304 und dem Draingebiet 306 ist ein Gatekontakt G angeordnet.

Der Feldeffekttransistor 112 weist geringe Abmaße auf. Dadurch sind eine Wärmekapazität und eine Latenz des Feldeffekttransistors 112 gering.

Neben dem Feldeffekttransistor 112 ist ein Koordinatensystem 310 dargestellt, das eine Dicke der Halbleiterschichten 300, 302 als x-Richtung definiert und einen lateralen Abstand zwischen den Dotiergebieten 304, 306 als y-Richtung definiert.

Die erste Halbleiterschicht 300 ist im dargestellten Ausführungsbeispiel aus Galliumarsenid GaAs. Die zweite Halbleiterschicht 302 ist aus n-dotiertem Aluminiumgalliumarsenid n AlGaAs. Die Dotiergebiete 304, 306 sind aus hoch n-dotiertem Galliumarsenid n+ GaAs.

Es wird ein Feldeffekttransistor 112 mit hoher Elektronenmobilität (HEMT) als temperaturempfindliches Bauteil 112 für bildgebende Anwendungen im Ferninfrarotbereich insbesondere unter Verwendung eines frequenzbasierten Auslesens vorgestellt.

Kern der Erfindung ist der Einsatz eines HEMTs 112 als temperatursensitives Element 112 eines Mikrobolometer Pixels. Der HEMT 112 wird in zwei Schichten 300, 302 aus unterschiedlichen Materialien epitaktisch auf das Pixel aufgebracht. Eine beispielhafte Materialkombination ist hoch n-dotiertes AlGaAs und undotiertes GaAs, denkbar sind aber auch beispielsweise Silizium Si und Siliziumgermanium SiGe. An der Grenzfläche der beiden Materialien bildet sich ein zwei-dimensionales Elektronengas, das den Stromfluss ermöglicht.

Sensiergröße ist entweder der Drain-Strom des Transistors 112 oder die Kapazität zwischen Gate G und Source S. Die Kapazität kann resonant über die Frequenzverschiebung eines Schwingkreises leicht ausgewertet werden. Die Sensitivität liegt in der Größenordnung von 0,5 %/K und ist im spezifizierten Temperaturbereich hoch linear und ein gut auswertbares Signal.

Von Vorteil ist zudem das deutlich verminderte Rauschen durch einen Stromfluss im Epi-Si anstatt an der Oberfläche beziehungsweise der Grenzfläche zwischen Oxid und Epi-Si. Im Vergleich zu konventionellen MOSFETs, treten Kurzkanaleffekte bei Gatelängen unter 1 µm deutlich vermindert auf, sodass stabile Strommessungen auch bei aggressiv skalierten Bauelementen 112 problemlos möglich sind.

Der Transistor 112 wird beispielsweise epitaktisch auf ein nicht dargestelltes n-Gitter aufgebracht. Das n-Gitter kann für einen Porös-Si-Prozess verwendet werden. Dabei wird in diesem Ausführungsbeispiel eine undotierte GaAs Schicht 300 auf dem n-Gitter aufgewachsen. Darauf wird eine n-dotierte AlGaAs Schicht 302 aufgewachsen. Auf die AlGaAs Schicht 302 wird eine stark n-dotierte GaAs Schicht 304, 306 aufgewachsen. Die stark n-dotierte GaAs Schicht 304, 306 wird im Bereich des späteren Gatekontakts G entfernt. Der Sourcekontakt S, Gatekontakt G und Drainkontakt D werden beispielsweise durch eine ganzflächige Metallabscheidung und eine anschließende Metallstrukturierung ausgebildet. Im Querschnitt ergibt sich damit beispielsweise das in Fig. 3 dargestellte Bauelement 112.

Der Stromfluss findet an der Grenzfläche zwischen dem n-dotierten AlGaAs 302 und dem GaAs 300 statt. Die Grenzflächenstörstellen, die massiv zum 1/f Rauschen beitragen, befinden sich jedoch im Bereich der Kontakte S, G, D. Hier wird bei der Herstellung des Sensorpixels 112 in nachfolgenden Schritten der in Fig. 2 gezeigte Absorber aus SiO2 und die Aufhängestruktur aus demselben Material aufgebracht. Dabei kann sich eine hohe Störstellendichte ergeben. Bei dem hier vorgestellten Ansatz wird die Temperaturmessung durch die Störstellen im Wesentlichen nicht beeinflusst.

Zur Strommessung reichen prinzipiell zwei Potenziale aus, wenn Gatekontakt G und Drainkontakt D direkt auf dem Pixel miteinander verdrahtet werden und eine Spannung geeigneter Größe angelegt wird. Die thermische Entkopplung des Pixels infolge einer zusätzlich zum Substrat geführten Leitung verschlechtert sich also durch den Einsatz eines HEMTs 112 nicht. Soll die Kapazität zwischen Gate G und Source S als Messgröße verwendet werden, sind zwei Kontakte ausreichend. Wenn der HEMT 112 über drei Kontakte S, G, D angeschlossen ist, kann ein zusätzlicher Bias eingestellt werden.

Sollen beide Messverfahren verfügbar sein, können ebenfalls die drei Leitungen zum ASIC geführt werden.

Die Anordnung einzelner Pixel in einer Matrix ist problemlos möglich. Dazu wird eine Switching Matrix, die bereits von DRAM-Speicherzellen bekannt ist, benötigt. Diese besteht im Normalfall aus lediglich einem zusätzlichen Transistor 112 pro Pixel.

Fig. 4 zeigt ein Ablaufdiagramm eines Verfahrens 400 zum Betreiben eines Sensorpixels gemäß einem Ausführungsbeispiel der vorliegenden Erfindung. Das Verfahren 400 weist einen Schritt 402 des Erfassens auf. Im Schritt 402 des Erfassens wird eine Sensiergröße an dem Feldeffekttransistor mit hoher Elektronenmobilität erfasst, wobei die Sensiergröße eine Temperatur des Feldeffekttransistors repräsentiert.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Sensor (100) zum Detektieren von Infrarotstrahlung (102), wobei der Sensor (100) die folgenden Merkmale aufweist:
ein Sensorpixel (106) zum Detektieren von Infrarotstrahlung (102), wobei das Sensorpixel (106) eine Absorberfläche (110) zum Absorbieren der Infrarotstrahlung (102) und einen an die Absorberfläche (110) thermisch gekoppelten Feldeffekttransistor (112) mit hoher Elektronenmobilität zum Erfassen einer Temperatur der Absorberfläche (110) aufweist, wobei der Feldeffekttransistor (112) einen Sourcekontakt (S), einen Drainkontakt (D) und einen Gatekontakt (G) aufweist; und
ein Steuergerät (108) zum Betreiben des Sensorpixels (106), wobei das Steuergerät (108) ausgebildet ist, um eine Sensiergröße (114) an dem Feldeffekttransistor (112) mit hoher Elektronenmobilität zu erfassen, wobei die Sensiergröße (114) eine Temperatur des Feldeffekttransistors (112) repräsentiert;
**dadurch gekennzeichnet, dass**
das Steuergerät (108) ausgebildet ist, um ein Spannungspotenzial zwischen dem Sourcekontakt (S) und dem Drainkontakt (D) anzulegen und als die Sensiergröße (114) einen Stromfluss zwischen dem Sourcekontakt (S) und dem Drainkontakt (D) zu messen, wobei der Stromfluss die Temperatur an dem Feldeffekttransistor (112) repräsentiert; und/oder
das Steuergerät (108) ausgebildet ist, um einen die Kapazität zwischen dem Sourcekontakt (S) und dem Gatekontakt (G) umfassenden Schwingkreis zu einer Schwingung im Bereich einer Resonanzfrequenz des Schwingkreises anzuregen und als die Sensiergröße (114) die Resonanzfrequenz zu messen, wobei die Resonanzfrequenz die Temperatur an dem Feldeffekttransistor (112) repräsentiert.

2. Sensor (100) gemäß Anspruch 1, bei dem das Sensorpixel (106) eine Balkenstruktur (200) und ein Substrat aufweist, wobei der Sourcekontakt (S) des Sensorpixels (106) über einen in der Balkenstruktur (200) des Sensorpixels (106) integrierten ersten Anschluss (202) zu dem Substrat des Sensorpixels (106) geführt ist und der Drainkontakt (D) über einen in der Balkenstruktur (200) integrierten zweiten Anschluss (202) zu dem Substrat geführt ist.

3. Sensor (100) gemäß Anspruch 2, bei dem der Dräinkontakt (D) mit dem Gatekontakt (G) verbunden ist und über den zweiten Anschluss (202) zu dem Substrat geführt ist oder bei dem der Gatekontakt (G) über einen in der Balkenstruktur (200) integrierten dritten Anschluss (202) zu dem Substrat geführt ist.

4. Sensor (100) gemäß einem der vorangegangenen Ansprüche, bei dem die Absorberfläche (110) im Bereich des Sourcekontakts (S) und/oder des Drainkontakts (D) mit dem Feldeffekttransistor (112) gekoppelt ist.

5. Verfahren (400) zum Betreiben eines Sensors (100) mit einem Sensorpixel (106) zum Detektieren von Infrarotstrahlung (102), wobei das Sensorpixel (106) eine Absorberfläche (110) zum Absorbieren der Infrarotstrahlung (102) und einen an die Absorberfläche (110) thermisch gekoppelten Feldeffekttransistor (112) mit hoher Elektronenmobilität zum Erfassen einer Temperatur der Absorberfläche (110) aufweist, wobei der Feldeffekttransistor (112) einen Sourcekontakt (S), einen Drainkontakt (D) und einen Gatekontakt (G) aufweist, wobei das Verfahren (400) einen Schritt (402) des Erfassens einer Sensiergröße (114) an dem Feldeffekttransistor (112) mit hoher Elektronenmobilität aufweist, wobei die Sensiergröße (114) eine Temperatur des Feldeffekttransistors (112) repräsentiert;
**dadurch gekennzeichnet, dass**
im Schritt (402) des Erfassens ein Spannungspotenzial zwischen dem Sourcekontakt (S) und dem Drainkontakt (D) angelegt wird und als die Sensiergröße (114) ein Stromfluss zwischen dem Sourcekontakt (S) und dem Drainkontakt (D) gemessen wird, wobei der Stromfluss eine Temperatur an dem Feldeffekttransistor (112) repräsentiert; und/oder im Schritt (402) des Erfassens ein, die Kapazität zwischen dem Sourcekontakt (S) und dem Gatekontakt (G) umfassender, Schwingkreis zu einer Schwingung im Bereich einer Resonanzfrequenz des Schwingkreises angeregt wird und als die Sensiergröße (114) die Resonanzfrequenz gemessen wird, wobei die Resonanzfrequenz eine Temperatur an dem Feldeffekttransistor (112) repräsentiert.

6. Verfahren (400) gemäß Anspruch 5, mit einem Schritt des Einstellens eines Arbeitspunkts des Feldeffekttransistors (112), wobei der Arbeitspunkt unter Verwendung eines elektrischen Anpassungspotenzials zwischen dem Drainkontakt (D) und dem Sourcekontakt (S) oder zwischen dem Drainkontakt (D) und dem Gatekontakt (G) eingestellt wird.

7. Verwendung eines Sensors (100) gemäß einem der Ansprüche 1 bis 4 zum Detektieren von Infrarotstrahlung (102).

## Claims

1. Sensor (100) for detecting infrared radiation (102), wherein the sensor (100) has the following features:
a sensor pixel (106) for detecting infrared radiation (102), wherein the sensor pixel (106) has an absorber surface (110) for absorbing the infrared radiation (102) and a high electron mobility field effect transistor (112) thermally coupled to the absorber surface (110) and serving for detecting a temperature of the absorber surface (110), wherein the field effect transistor (112) has a source contact (S), a drain contact (D) and gate contact (G); and
a control device (108) for operating the sensor pixel (106) wherein the control device (108) is designed to detect a sensing variable (114) at the high electron mobility field effect transistor (112), wherein the sensing variable (114) represents a temperature of the field effect transistor (112);
**characterized in that**
the control device (108) is designed to apply a voltage potential between the source contact (S) and the drain contact (D) and to measure a current flow between the source contact (S) and the drain contact (D) as the sensing variable (114), wherein the current flow represents the temperature at the field effect transistor (112); and/or
the control device (108) is designed to excite a resonant circuit, comprising the capacitance between the source contact (S) and the gate contact (G), to oscillate in the region of a resonant frequency of the resonant circuit and to measure the resonant frequency as the sensing variable (114), wherein the resonant frequency represents the temperature at the field effect transistor (112).

2. Sensor (100) according to Claim 1, wherein the sensor pixel (106) has a beam structure (200) and a substrate, wherein the source contact (S) of the sensor pixel (106) is led via a first connection (202), integrated in the beam structure (200) of the sensor pixel (106) to the substrate of the sensor pixel (106), and the drain contact (D) is led via a second connection (202), integrated in the beam structure (200), to the substrate.

3. Sensor (100) according to Claim 2, wherein the drain contact (D) is connected to the gate contact (G) and is led via the second connection (202) to the substrate, or wherein the gate contact (G) is led via a third connection (202), integrated in the beam structure (200), to the substrate.

4. Sensor (100) according to any of the preceding claims, wherein the absorber surface (110) is coupled to the field effect transistor (112) in the region of the source contact (S) and/or of the drain contact (D).

5. Method (400) for operating a sensor (100) having a sensor pixel (106) for detecting infrared radiation (102), wherein the sensor pixel (106) has an absorber surface (110) for absorbing the infrared radiation (102) and a high electron mobility field effect transistor (112) thermally coupled to the absorber surface (110) and serving for detecting a temperature of the absorber surface (110), wherein the field effect transistor (112) has a source contact (S), a drain contact (D) and a gate contact (G), wherein the method (400) has a step (402) of detecting a sensing variable (114) at the high electron mobility field effect transistor (112), wherein the sensing variable (114) represents a temperature of the field effect transistor (112);
**characterized in that**
in step (402) of detecting, a voltage potential is applied between the source contact (S) and the drain contact (D), and a current flow between the source contact (S) and the drain contact (D) is measured as the sensing variable (114), wherein the current flow represents a temperature at the field effect transistor (112); and/or
in step (402) of detecting, a resonant circuit, comprising the capacitance between the source contact (S) and the gate contact (G) is excited to oscillate in the region of a resonant frequency of the resonant circuit, and the resonant frequency is measured as the sensing variable (114), wherein the resonant frequency represents a temperature at the field effect transistor (112).

6. Method (400) according to Claim 5, comprising a step of setting an operating point of the field effect transistor (112) wherein the operating point is set using an electrical matching potential between the drain contact (D) and the source contact (S) or between the drain contact (D) and the gate contact (G).

7. Use of a sensor (100) according to any of Claims 1 to 4 for detecting infrared radiation (102).

## Revendications

1. Capteur (100) destiné à détecter un rayonnement infrarouge (102), dans lequel le capteur (100) comporte :
un pixel de capteur (106) destiné à détecter un rayonnement infrarouge (102), dans lequel le pixel de capteur (106) comporte une surface absorbante (110) destinée à absorber le rayonnement infrarouge (102) et un transistor à effet de champ (112) ayant une mobilité électronique élevée couplé thermiquement à la surface absorbante (110) pour détecter une température de la surface absorbante (110), dans lequel le transistor à effet de champ (112) comporte un contact de source (S), un contact de drain (D) et un contact de grille (G) ;
et
un appareil de commande (108) destiné à mettre en fonctionnement le pixel de capteur (106), dans lequel l'appareil de commande (108) est conçu pour détecter une grandeur de détection (114) au niveau du transistor à effet de champ (112) ayant une mobilité électronique élevée, dans lequel la grandeur de détection (114) représente une température du transistor à effet de champ (112) ;
**caractérisé en ce que**
l'appareil de commande (108) est conçu pour appliquer un potentiel de tension entre le contact de source (S) et le contact de drain (D) et pour mesurer, en tant que grandeur de détection (114), un courant passant entre le contact de source (S) et le contact de drain (D), dans lequel le courant représente la température au niveau du transistor à effet de champ (112) ; et/ou l'appareil de commande (108) est conçu pour exciter un circuit oscillant comprenant la capacité entre le contact de source (S) et le contact de grille (G) pour le mettre en oscillation dans la région d'une fréquence de résonance du circuit oscillant et pour mesurer la fréquence de résonance en tant que grandeur de détection (114), dans lequel la fréquence de résonance représente la température au niveau du transistor à effet de champ (112).

2. Capteur (100) selon la revendication 1, dans lequel le pixel de capteur (106) présente une structure de barre (200) et un substrat, dans lequel le contact de source (S) du pixel de capteur (106) est guidé vers le substrat du pixel de capteur (106) par l'intermédiaire d'une première borne (202) intégrée à la structure de barre (200) du pixel de capteur (106), et le contact de drain (D) est guidé vers le substrat par l'intermédiaire d'une deuxième borne (202) intégrée à la structure de barre (200).

3. Capteur (100) selon la revendication 2, dans lequel le contact de drain (D) est relié au contact de grille (G) et est guidé vers le substrat par l'intermédiaire de la deuxième borne (202), ou dans lequel le contact de grille (G) est guidé vers le substrat par l'intermédiaire d'une troisième borne (202) intégré à la structure de barre (200).

4. Capteur (100) selon l'une quelconque des revendications précédentes, dans lequel la surface absorbante (110) est couplée au transistor à effet de champ (112) dans la région du contact de source (S) et/ou du contact de drain (D).

5. Procédé (400) de mise en fonctionnement d'un capteur (100) comportant un pixel de capteur (106) destiné à détecter un rayonnement infrarouge (102), dans lequel le pixel de capteur (106) comporte une surface absorbante (110) destinée à absorber le rayonnement infrarouge (102) et un transistor à effet de champ (112) ayant une mobilité électronique élevée couplé thermiquement à la surface absorbante (110) pour détecter une température de la surface absorbante (110), dans lequel le transistor à effet de champ (112) comporte un contact de source (S), un contact de drain (D) et un contact de grille (G), dans lequel le procédé (400) comporte une étape (402) de détection d'une grandeur de détection (114) au niveau du transistor à effet de champ (112) ayant une mobilité électronique élevée, dans lequel la grandeur de détection (114) représente une température du transistor à effet de champ (112) ;
**caractérisé en ce que**,
lors de l'étape (402) de détection, un potentiel de tension est appliqué entre le contact de source (S) et le contact de drain (D) et un courant passant entre le contact de source (S) et le contact de drain (D) est mesuré en tant que grandeur de détection (114), dans lequel le courant représente une température au niveau du transistor à effet de champ (112) ; et/ou lors de l'étape (402) de détection, un circuit oscillant comprenant la capacité entre le contact de source (S) et le contact de grille (G) est excité pour être mis en oscillation dans la région d'une fréquence de résonance du circuit oscillant et la fréquence de résonance est mesurée en tant que grandeur de détection (114), dans lequel la fréquence de résonance représente une température au niveau du transistor à effet de champ (112).

6. Procédé (400) selon la revendication 5, comprenant une étape consistant à régler un point de fonctionnement du transistor à effet de champ (112), dans lequel le point de fonctionnement est réglé par utilisation d'un potentiel d'adaptation électrique entre le contact de drain (D) et le contact de source (S) ou entre le contact de drain (D) et le contact de grille (G).

7. Utilisation d'un capteur (100) selon l'une quelconque des revendications 1 à 4 pour détecter un rayonnement infrarouge (102).
